# EUROPEAN PATENT APPLICATION

(11) **EP 4 711 649 A1**
(43) Date of publication of application: **18.03.2026**
(21) Application number: 23937586.8
(22) Date of filing: 28.12.2023
(51) Int. Cl.: F16J 15/3204, F16J 15/3244

(54) **SEALING DEVICE**

(30) Priority: 12.05.2023 JP 2023079383
(71) Applicant: NOK Corporation, Minato-ku Tokyo 105-8585 (JP)
(72) Inventor: SUGIYAMA Junya, Fukushima-shi, Fukushima 960-1193 (JP); NAGAHAMAYA Hideaki, Fukushima-shi, Fukushima 960-1193 (JP); SEKI Masatoshi, Fukushima-shi, Fukushima 960-1193 (JP); YOSHIMURA Kenichi, Fukushima-shi, Fukushima 960-1193 (JP)
(74) Representative: TBK
(86) International application number: PCT/JP2023/047294
(87) International publication number: WO 2024/236854

(57) **Abstract**

A sealing device (1) includes: a reinforcement ring (10); and an elastic body portion (20) that has a seal lip (21), is mounted on the reinforcement ring (10), and is formed with an elastic body. An atmosphere-side surface (23) of a lip distal end portion (22) of the seal lip (21) has an inhibition portion (30) which inhibits leakage of a sealed fluid to an atmosphere side (a) in forward rotation of a rotating shaft and has a storage portion (40) which stores the sealed fluid which leaks out to the atmosphere side (a) in reverse rotation of the rotating shaft (50). The inhibition portion (30) has a plurality of screw projections (31) for returning the sealed fluid, which leaks out, to a sealing target object side (b) by a pump action when the rotating shaft performs the forward rotation. The storage portion (40) has a weir portion (41) for blocking the sealed fluid, which leaks out to the atmosphere side (a), when the rotating shaft performs the reverse rotation.

## Description

### Technical Field

The present invention relates to a sealing device.

### Background Art

In recent years, in electric automobiles, for size reduction and weight reduction of a driving unit, a rotation speed of a motor shaft has tended to increase. For example, the rotation speed of the motor shaft has been increased to approximately -80 to 80 m/s when converted into a circumferential speed. In an electric automobile, structurally, a rotation direction of the motor is reversed between forward travel and backward travel.

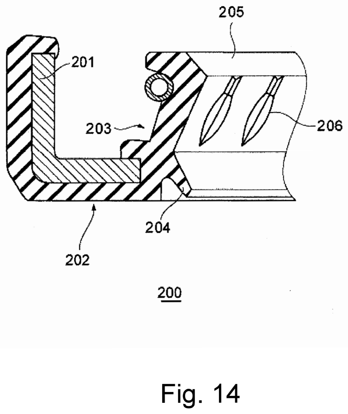

Here, in related art, in automobiles, general-purpose machines, and so forth, a sealing device has been used for sealing a gap between a rotating shaft and a through hole (in other words, a shaft hole), of a housing, through which the rotating shaft is inserted. Fig. 14 is a cross-sectional view in a cross section along an axis line for illustrating an outline configuration of one example of the sealing device in related art. For example, among sealing devices in related art, there is a sealing device such as a sealing device 200 illustrated in Fig. 14. In the sealing device 200, an elastic body portion 202 formed with an elastic body is integrally formed in a reinforcement ring 201 formed of metal, and a seal lip 203 and a dust lip 204 are formed in the elastic body portion 202. In the seal lip 203, on an inner periphery side, a lip distal end portion 205 with a cross section in a wedge shape protruding toward an axis line is formed. In the sealing device 200 in related art, the lip distal end portion 205 contacts a shaft and performs sealing for a sealed fluid such as oil as a sealing target object.

Among sealing devices in related art, there has been a sealing device that includes a plurality of screw projections which form an air flow moving from an atmosphere side toward a sealing target object side, exhibit a pump action for pushing back droplets of oil to the sealing target object side, the droplets leaking out to the atmosphere side beyond a lip distal end portion in high speed rotation of a rotating shaft, and are arrayed at equal intervals. For example, like the sealing device 200 illustrated in Fig. 14, a sealing device has been suggested in which a plurality of screw projections 206 are provided at equal intervals on an atmosphere-side surface of the lip distal end portion 205 (for example, see Patent Literature 1). The screw projection 206 is provided to be inclined to one rotation direction (forward rotation direction) side from an end portion on the atmosphere side to an end portion on the sealing target object side, and the pump action is thereby exhibited when the rotating shaft rotates in the forward rotation direction.

### Citation List

### Patent Literature

### Patent Literature 1

Japanese Patent No. 3278349

### Summary of Invention

### Technical Problem

However, as for a sealing device 200 as illustrated in Fig. 14, in a case where a shaft or the like of a motor is used as a rotating shaft which rotates in both directions of forward rotation and reverse rotation as in the motor of an electric automobile, in the reverse rotation of the rotating shaft, the screw projections 206 might not exhibit a pump action from an atmosphere side to a sealing target object side. Thus, for example, in the reverse rotation, when an irregularity such as an entrapment of foreign matter or sludge occurs, a sealed fluid such as oil might leak out to the atmosphere side along the screw projections 206.

As described above, for a sealing device, a structure has been demanded which can prevent leakage of a sealed fluid such as oil in both of forward rotation and reverse rotation.

In consideration of the above problems, the present invention provides a sealing device that can inhibit leakage of a sealed fluid in both of forward rotation and reverse rotation.

### Solution to Problem

For solving the above-described problems, the present invention provides the following sealing device.

A sealing device according to the present invention is a sealing device used for a rotating shaft which rotates in one direction and in another direction, the sealing device including: a reinforcement ring that is annular around a rotation axis line; and an elastic body portion that has a seal lip, is mounted on the reinforcement ring, is formed with an elastic body, and is annular around the rotation axis line, in which the seal lip has a lip distal end portion as an annular portion which protrudes toward the rotation axis line, the lip distal end portion has a sealing-side surface as an annular surface on a sealing target object side and an atmosphere-side surface as an annular surface on an atmosphere side, the sealing-side surface and the atmosphere-side surface being connected together via a lip distal end, the atmosphere-side surface has an inhibition portion which inhibits leakage of a sealing target object to the atmosphere side even when the rotating shaft rotates in the one direction at a circumferential speed of 80 m/s, and has a storage portion which stores the sealing target object leaking out to the atmosphere side even when the rotating shaft rotates in the other direction at a circumferential speed of 80 m/s, the inhibition portion has a plurality of screw projections for returning the sealing target object, which leaks out, to the sealing target object side by a pump action when the rotating shaft rotates in the one direction, and the storage portion has a weir portion as a projection for blocking the sealing target object, which leaks out to the atmosphere side, when the rotating shaft rotates in the other direction.

In the sealing device according to one aspect of the present invention, the weir portion blocks the sealing target object such that the stored sealing target object is returned to the sealing target object side by the screw projections when the rotating shaft rotates in the one direction.

In the sealing device according to one aspect of the present invention, a distance between the weir portion and an end of the atmosphere-side surface on the sealing target object side in the rotation axis line direction is a predetermined distance, and the predetermined distance is based on an amount of the sealing target object to be stored in the storage portion.

In the sealing device according to one aspect of the present invention, a distance between the weir portion and an end of the atmosphere-side surface on the sealing target object side in the rotation axis line direction is a predetermined distance, and the predetermined distance is based on an amount of the sealing target object to be returned to the sealing target object side by the inhibition portion.

In the sealing device according to one aspect of the present invention, the weir portion has a predetermined height, and the predetermined height is based on an amount of the sealing target object to be stored in the storage portion.

In the sealing device according to one aspect of the present invention, the weir portion has a predetermined height, and the predetermined height is based on an amount of the sealing target object to be returned to the sealing target object side by the inhibition portion.

In the sealing device according to one aspect of the present invention, the weir portion is connected to the plurality of screw projections.

In the sealing device according to one aspect of the present invention, a height of the weir portion is equal to or lower than a height of a portion of each of the plurality of screw projections, to which the weir portion is connected.

In the sealing device according to one aspect of the present invention, the weir portion has a surface which faces the sealing target object side, and the surface of the weir portion which faces the sealing target object side is inclined to the atmosphere side with respect to a plane orthogonal to the rotation axis line.

In the sealing device according to one aspect of the present invention, the weir portion extends in an annular shape around the rotation axis line.

In the sealing device according to one aspect of the present invention, the screw projection has a hull-shaped projection, and a height of the hull-shaped projection of the screw projection increases to a predetermined position and decreases from the predetermined position, from an end of the hull-shaped projection on the sealing target object side toward an end of the hull-shaped projection on the atmosphere side.

In the sealing device according to one aspect of the present invention, a height of the end of the hull-shaped projection on the sealing target object side is set to a height which inhibits lowering of sealing performance of the seal lip.

In the sealing device according to one aspect of the present invention, the hull-shaped projection extends from an end of the atmosphere-side surface on the sealing target object side or a position spaced apart from the end of the atmosphere-side surface on the sealing target object side to the atmosphere side.

In the sealing device according to one aspect of the present invention, the screw projection has a parallel projection as a portion in which a height is constant, and the parallel projection extends from the end of the hull-shaped projection on the sealing target object side to an end of the atmosphere-side surface on the sealing target object side.

In the sealing device according to one aspect of the present invention, the screw projection is inclined in the one direction with respect to an end of the atmosphere-side surface on the sealing target object side.

In the sealing device according to one aspect of the present invention, the storage portion has another weir portion, and the other weir portion is provided on the atmosphere side relative to the weir portion.

In the sealing device according to one aspect of the present invention, a height of the other weir portion is higher than a height of the weir portion.

A sealing device according to the present invention is a sealing device used for a rotating shaft which rotates in one direction and in another direction, the sealing device including: a reinforcement ring that is annular around a rotation axis line; and an elastic body portion that has a seal lip, is mounted on the reinforcement ring, is formed with an elastic body, and is annular around the rotation axis line, in which the seal lip has a lip distal end portion as an annular portion which protrudes toward the rotation axis line, the lip distal end portion has a sealing-side surface as an annular surface on a sealing target object side and an atmosphere-side surface as an annular surface on an atmosphere side, the sealing-side surface and the atmosphere-side surface being connected together via a lip distal end, the atmosphere-side surface has an inhibition portion which inhibits leakage of a sealing target object to the atmosphere side when the rotating shaft rotates in the one direction, and has a storage portion which stores the sealing target object leaking out to the atmosphere side when the rotating shaft rotates in the other direction, the inhibition portion has a plurality of screw projections for returning the sealing target object, which leaks out, to the sealing target object side by a pump action when the rotating shaft rotates in the one direction, and the storage portion has a weir portion as a projection for blocking the sealing target object, which leaks out to the atmosphere side, when the rotating shaft rotates in the other direction.

### Advantageous Effect of Invention

The above-described sealing device can inhibit leakage of a sealed fluid in both of rotation of a rotating shaft in one direction (forward rotation) and rotation in another direction (reverse rotation).

### Brief Description of Drawings

[Fig. 1] Fig. 1 is a cross-sectional view in a cross section along a rotation axis line for illustrating an outline configuration of one embodiment of a sealing device.
[Fig. 2] Fig. 2 is a partially enlarged cross-sectional view of the sealing device illustrated in Fig. 1.
[Fig. 3] Fig. 3 is a partially enlarged cross-sectional view in which a part of the sealing device illustrated in Fig. 2 is further enlarged.
[Fig. 4] Fig. 4 is a cross-sectional view illustrating a cross section of screw projections of the sealing device illustrated in Fig. 1, the cross section being orthogonal to an extending direction of the screw projections.
[Fig. 5] Fig. 5 is a partial enlarged cross-sectional view in which the screw projection of the sealing device illustrated in Fig. 1 is seen in a circumferential direction.
[Fig. 6] Fig. 6 is a cross-sectional view illustrating a cross section of weir portions of the sealing device illustrated in Fig. 1, the cross section being orthogonal to an extending direction of the weir portions.
[Fig. 7] Fig. 7 is a diagram illustrating a relationship between a height of a parallel projection of the screw projection in the sealing device illustrated in Fig. 1 and contact between a lip distal end portion and a rotating shaft.
[Fig. 8] Fig. 8 is a partial cross-sectional view for explaining a usage state of the sealing device illustrated in Fig. 1.
[Fig. 9] Fig. 9 is a schematic diagram for explaining flow behavior of a sealed fluid in reverse rotation of the rotating shaft in the sealing device illustrated in Fig. 1.
[Fig. 10] Fig. 10 is a schematic diagram for explaining the flow behavior of the sealed fluid in forward rotation of the rotating shaft in the sealing device illustrated in Fig. 1.
[Fig. 11] Fig. 11 is a schematic diagram for illustrating an outline configuration of one embodiment of a driving system including the sealing device.
[Fig. 12] Fig. 12 is a schematic diagram for explaining flow behavior of a sealed fluid in reverse rotation of a rotating shaft in a sealing device in related art.
[Fig. 13] Fig. 13 is a schematic diagram for explaining the flow behavior of the sealed fluid in forward rotation of the rotating shaft in the sealing device in related art.
[Fig. 14] Fig. 14 is a cross-sectional view in a cross section along an axis line for illustrating an outline configuration of one example of the sealing device in related art.

### Description of Embodiments

Embodiments of the present invention will hereinafter be described with reference to drawings. Note that it should be understood that the present invention is not limited to the following embodiments and changes, improvements, and so forth in design can appropriately be applied based on ordinary knowledge of a person skilled in the art without departing from the scope of the gist of the present invention.

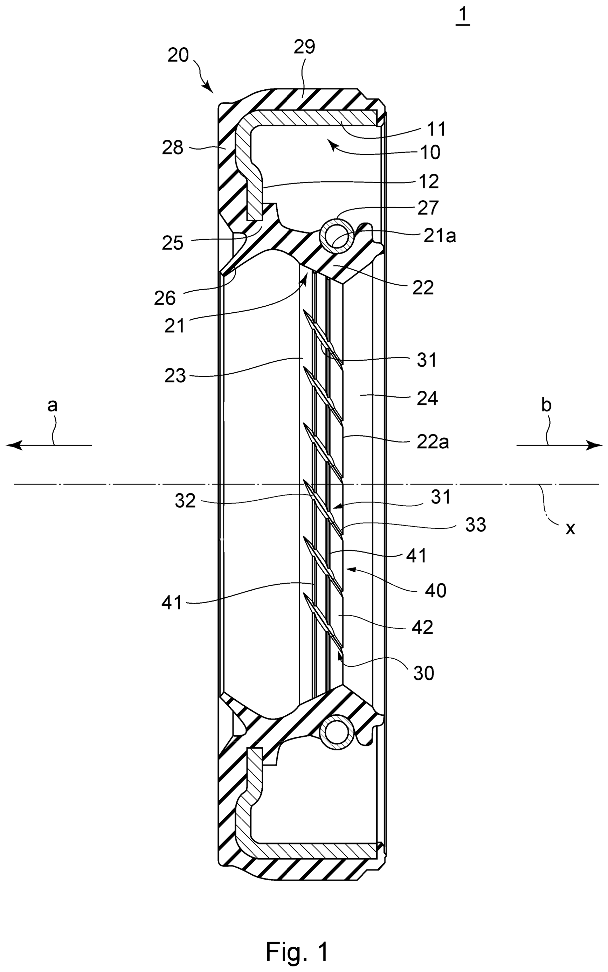

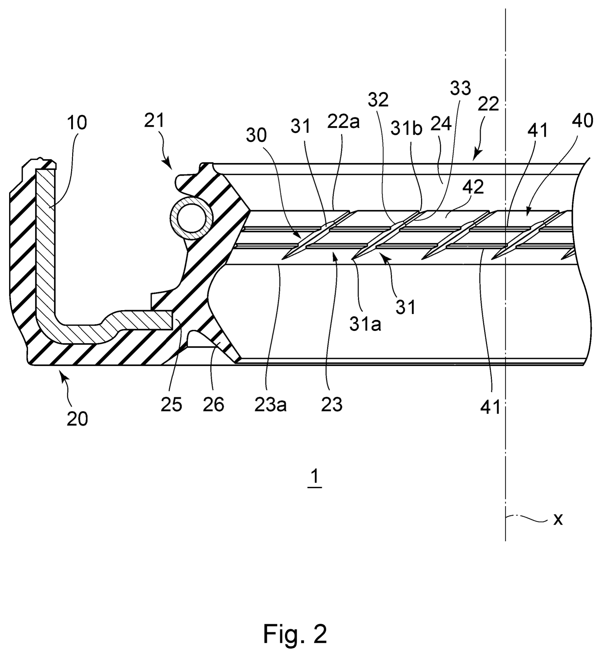

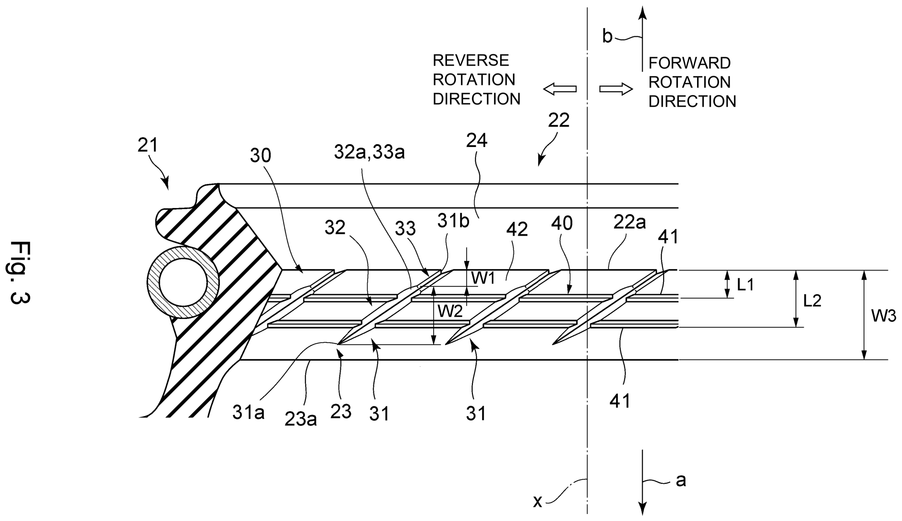

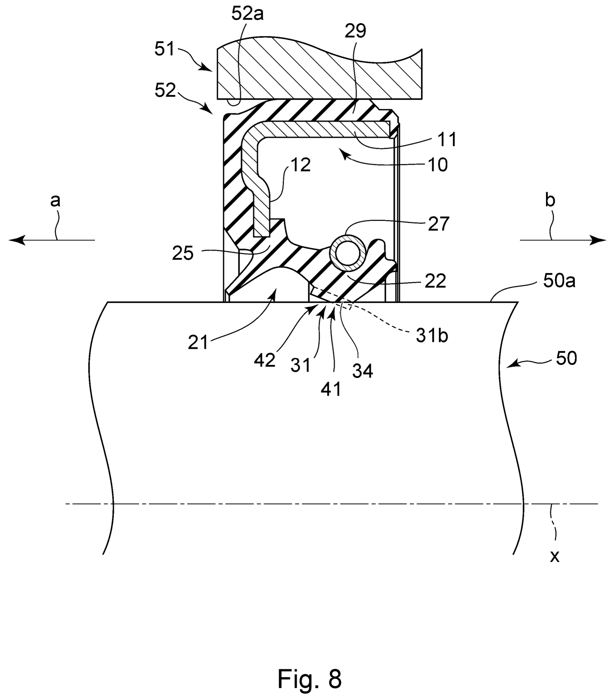

One embodiment of the present sealing device is a sealing device 1 as illustrated in Fig. 1 to Fig. 3. The sealing device 1 is a sealing device that is used for a rotating shaft which rotates in a forward direction as one direction and in a reverse direction as another direction. Specifically, in a usage state where the sealing device 1 is mounted on an application target, as illustrated in Fig. 8, the sealing device 1 slidably contacts an outer peripheral surface 50a of a rotating shaft 50 and is for thereby sealing a sealed fluid as a sealing target object to a sealing target object side on which the sealing target object is stored. The sealing device 1 is used for sealing a portion between an output shaft and a housing in a motor of an electric automobile, for example. Here, Fig. 1 is a cross-sectional view in a cross section along a rotation axis line for illustrating an outline configuration of one embodiment of the sealing device. Fig. 2 is a partially enlarged cross-sectional view of the sealing device illustrated in Fig. 1, and Fig. 3 is a partially enlarged cross-sectional view in which a part of the sealing device illustrated in Fig. 2 is further enlarged. Fig. 8 is a partial cross-sectional view for explaining the usage state of the sealing device illustrated in Fig. 1. Note that in the drawings, there are cases where reference characters are given to not all of a plurality of configuration elements and reference characters of a part of the plurality of configuration elements are omitted.

Hereinafter, for convenience of description, a side of an arrow a (see Fig. 1 and Fig. 3) direction in a rotation axis line x direction indicated in Fig. 8 is set as an outer side, and a side of an arrow b (see Fig. 1 and Fig. 3) direction in the rotation axis line x direction is set as an inner side. More specifically, the outer side denotes a side opposite to a side of the sealing target object and an atmosphere side (hereinafter, also referred to as a "atmosphere side a") on which the sealing target object is prevented from being present. On the other hand, the inner side denotes the side of the sealing target object, a side on which sealing is performed for the sealing target object such as oil, and the sealing target object side (hereinafter, also referred to as a "sealing target object side b").

As illustrated in Fig. 1 to Fig. 3, the sealing device 1 of the present embodiment includes a reinforcement ring 10 which is annular around the rotation axis line x and an elastic body portion 20. The elastic body portion 20 is a member, which is mounted on the reinforcement ring 10, is formed with an elastic body, and is annular around the rotation axis line x, and has a seal lip 21.

The reinforcement ring 10 is formed into a circular ring shape or an approximately circular ring shape which has the rotation axis line x as a center, for example, and a cross section along the rotation axis line x (hereinafter, also simply referred to as a "cross section") exhibits an approximately L-like shape. Hereinafter, in a direction perpendicular to the rotation axis line x (hereinafter, also referred to as a "radial direction"), a direction moving away from the rotation axis line x is set as an outer periphery side, and a direction moving close to the rotation axis line x is set as an inner periphery side. The reinforcement ring 10 has a cylindrical portion 11 as a portion which is cylindrical or approximately cylindrical and a flange portion 12 as a portion which has a hollow disk shape and expands from an end portion of the cylindrical portion 11 on the outer side to the inner periphery side.

The elastic body portion 20 is mounted on the reinforcement ring 10, and in the sealing device 1, the elastic body portion 20 and the reinforcement ring 10 are integrally formed so as to cover the reinforcement ring 10 from the outer side and the outer periphery side. The elastic body portion 20 is reinforced by the reinforcement ring 10.

The reinforcement ring 10 is formed of metal, for example. Examples of a metal material for the reinforcement ring 10 may include stainless steel and SPCC (cold rolled steel sheet). Examples of an elastic body for the elastic body portion 20 may include various rubber materials. Examples of the various rubber materials may include synthetic rubber such as nitrile rubber (NBR), hydrogenated nitrile rubber (H-NBR), acrylic rubber (ACM), and fluororubber (FKM). The reinforcement ring 10 is manufactured by press processing or forging, for example. Further, the elastic body portion 20 is molded by crosslinking (vulcanization) molding using a mold, for example. In this crosslinking molding, the reinforcement ring 10 is arranged in the mold, the elastic body portion 20 is adhered to the reinforcement ring 10 by crosslinking adhesion, and the elastic body portion 20 and the reinforcement ring 10 are thereby integrally molded.

As described above, the elastic body portion 20 has the seal lip 21, and the seal lip 21 has a lip distal end portion 22 as an annular portion which protrudes toward the rotation axis line x on the inner periphery side. Further, the elastic body portion 20 has a lip body portion 25. In the elastic body portion 20, the lip body portion 25 is an annular portion which is positioned in the vicinity of an end portion, on the inner periphery side, in the flange portion 12 of the reinforcement ring 10. The seal lip 21 is a portion which is, in its end portion on the outer side, connected to the lip body portion 25 and extends from the lip body portion 25 toward the inner side. The seal lip 21 is arranged to be opposed to the cylindrical portion 11 of the reinforcement ring 10. Further, the elastic body portion 20 has a dust lip 26. The dust lip 26 extends outward from the lip body portion 25 toward the axis line x.

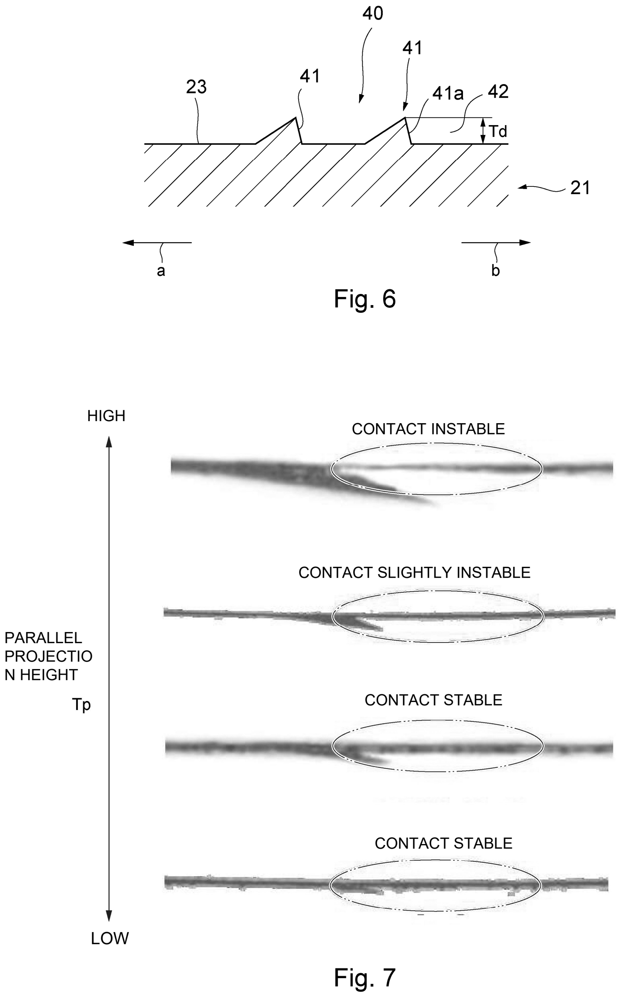

Specifically, the lip distal end portion 22 of the seal lip 21 is a portion, which has a circular ring shape or an approximately circular ring shape having the rotation axis line x as a center or an approximate center, and is formed in an end portion of the seal lip 21 on the inner side. A cross-sectional shape of the lip distal end portion 22 is a wedge shape which protrudes toward the inner periphery side. In the usage state which will be described later, the lip distal end portion 22 is formed such that a tip end portion on the inner periphery side contacts the outer peripheral surface of the rotating shaft 50 (see Fig. 6). More specifically, so that the lip distal end portion 22 contacts the outer peripheral surface 50a of the rotating shaft 50 (see Fig. 8) throughout a predetermined width in the rotation axis line x direction, an interference of the lip distal end portion 22 with respect to the rotating shaft 50 is set.

The lip distal end portion 22 is demarcated by an annular atmosphere-side surface 23 on the atmosphere side and an annular sealing-side surface 24 on the sealing target object side, the atmosphere-side surface 23 and the sealing-side surface 24 being connected to each other via a lip contact end 22a. The atmosphere-side surface 23 is a surface which faces the atmosphere side a (outer side) and is a tapered surface which has a conical surface shape or an approximately conical surface shape and which increases in diameter as progresses toward the outer side (arrow a direction) in the rotation axis line x direction. The sealing-side surface 24 is a surface which faces the sealing target object side b (inner side) and is a tapered surface which has a conical surface shape or an approximately conical surface shape and which increases in diameter as progresses toward the inner side (arrow b direction) in the rotation axis line x direction.

The atmosphere-side surface 23 and the sealing-side surface 24 cross each other on small diameter sides, and in a portion in which these cross each other, the lip contact end 22a as a lip distal end is formed. The lip contact end 22a describes a circle or an approximate circle which has the rotation axis line x as a center or an approximate center in a cross section orthogonal to the rotation axis line x and is a portion, which is positioned furthest on the inner periphery side, in the lip distal end portion 22. The lip distal end portion 22 is formed such that the lip contact end 22a slidably contacts the outer peripheral surface of the rotating shaft in the usage state, which will be described later, and seals a portion between the rotating shaft and the sealing device 1.

In a portion of the seal lip 21 on the outer periphery side, a garter spring 27 is fitted on a recessed part 21a so as to be opposed to the lip distal end portion 22. The garter spring 27 is a spring member formed of metal, for example, pushes the lip distal end portion 22 of the seal lip 21 to the inner periphery side in the radial direction, and applies tightening force of a predetermined magnitude, for the outer peripheral surface of the rotating shaft, to the lip distal end portion 22 in the usage state which will be described later.

The dust lip 26 is a portion which extends from the lip body portion 25 to the outer side (arrow a direction) and the inner periphery side toward the rotation axis line x. In the usage state which will be described later, the dust lip 26 prevents foreign matter such as muddy water, sand, and dust from entering from the outer side (arrow a direction) toward the lip distal end portion 22.

Further, as illustrated in Fig. 1, the elastic body portion 20 has a rear cover 28 and a gasket portion 29. The rear cover 28 is a portion which covers the flange portion 12 of the reinforcement ring 10 from the outer side, and the gasket portion 29 is a portion which covers the cylindrical portion 11 of the reinforcement ring 10 from the outer periphery side. The gasket portion 29 is a portion for fixing the sealing device 1 to a through hole (in other words, a shaft hole) of a member, through which the rotating shaft is inserted and which is not illustrated, in the usage state. When the sealing device 1 is press-fitted into the above-described through hole, the gasket portion 29 is compressed in the radial direction between the through hole and the cylindrical portion 11 of the reinforcement ring 10 and produces fitting force as force directed in the radial direction. A thickness of the gasket portion 29 in the radial direction is set such that fitting force of a predetermined magnitude is produced when the sealing device 1 is press-fitted into the through hole. As described above, the elastic body portion 20 has portions of the seal lip 21, the lip body portion 25, the dust lip 26, the rear cover 28, and the gasket portion 29 and is integrally formed of the elastic body.

In the sealing device 1 of the present embodiment, leakage of the sealed fluid to the atmosphere side a on an opposite side, via the seal lip 21, to the sealing target object side b is inhibited in both of forward rotation and reverse rotation of the rotating shaft 50 (see Fig. 8). Thus, the sealing device 1 of the present embodiment can effectively inhibit leakage of the sealed fluid such as oil from the sealing target object side b. In particular, the sealing device 1 of the present embodiment can effectively inhibit leakage of the sealed fluid to the atmosphere side a even when an entrapment or the like of foreign matter or sludge occurs in the reverse rotation.

In the sealing device 1 of the present embodiment, there is no particular restriction about a mechanism which inhibits leakage of the sealed fluid to the atmosphere side a in the forward rotation and reverse rotation. For example, as illustrated in Figs. 1 to 3, the sealing device 1 of the present embodiment has an inhibition portion 30 that inhibits leakage, to the atmosphere side a, of the sealed fluid, which is exuded to the atmosphere side a beyond the lip contact end 22a in the forward rotation of the rotating shaft 50, on a slant surface of the atmosphere-side surface 23, on the atmosphere side a, of the lip distal end portion 22 of the seal lip 21. The inhibition portion 30 inhibits leakage of the sealed fluid to the atmosphere side a even when the rotating shaft 50 performs the forward rotation at a circumferential speed of 80 m/s, for example. Specifically, the inhibition portion 30 has a plurality of screw projections 31 for returning the exuded sealed fluid to the sealing target object side b by a pump action when the rotating shaft 50 performs the forward rotation. Further, the sealing device 1 has a storage portion 40 that stores the sealed fluid, which is exuded to the atmosphere side a beyond the lip contact end 22a in the reverse rotation of the rotating shaft 50, on the slant surface of the atmosphere-side surface 23, on the atmosphere side a, of the lip distal end portion 22 of the seal lip 21. The storage portion 40 stores the sealed fluid exuded to the atmosphere side a even when the rotating shaft 50 performs the reverse rotation at a circumferential speed of 80 m/s, for example. Specifically, the storage portion 40 has a weir portion 41 as a projection for blocking the sealed fluid exuded to the atmosphere side a when the rotating shaft 50 performs the reverse rotation.

As described above, the plurality of screw projections 31, which are provided in the inhibition portion 30 formed in the lip distal end portion 22, exhibit the pump action in the forward rotation of the rotating shaft 50 and thereby return the sealed fluid, which is exuded to the atmosphere side a beyond the lip contact end 22a, to the sealing target object side b. On the other hand, in the reverse rotation of the rotating shaft 50, the plurality of screw projections 31 do not exhibit the pump action or do not exhibit a sufficient pump action, but the weir portion 41, which is provided in the storage portion 40 formed in the lip distal end portion 22, stores the sealed fluid exuded to the atmosphere side a beyond the lip contact end 22a. The plurality of screw projections 31 exhibit the pump action also for the sealed fluid stored in the storage portion 40 in the forward rotation of the rotating shaft 50, and the sealed fluid stored in the storage portion 40 is thereby returned to the sealing target object side b. In such a manner, the storage portion 40 forms a liquid blocking region 42 which temporarily blocks and stores the sealed fluid.

By the inhibition portion 30 and the storage portion 40, in the reverse rotation of the rotating shaft 50, the sealed fluid exuded to the atmosphere side a is temporarily stored in the liquid blocking region 42, and in the forward rotation and reverse rotation of the rotating shaft 50, substantial leakage of the sealed fluid to the atmosphere side a is prevented, or leakage of the sealed fluid to the atmosphere side a is inhibited. In other words, in the reverse rotation of the rotating shaft 50, the sealed fluid exuded to the atmosphere side a is stored in the liquid blocking region 42, and in the reverse rotation of the rotating shaft 50, substantial leakage of the sealed fluid to the atmosphere side a is prevented, or leakage of the sealed fluid to the atmosphere side a is inhibited. On the other hand, in the forward rotation of the rotating shaft 50, by the pump action of the inhibition portion 30, the sealed fluid stored in the liquid blocking region 42 is pushed back to the sealing target object side b, and the sealed fluid which is newly exuded to the atmosphere side a is pushed back to the sealing target object side b. Accordingly, in the forward rotation of the rotating shaft 50, substantial leakage of the sealed fluid to the atmosphere side a is prevented, or leakage of the sealed fluid to the atmosphere side a is inhibited. Hereinafter, a specific description will be made about a plurality of screw projections 30 of the inhibition portion 30 and the weir portion 41 of the storage portion 40.

As illustrated in Figs. 1 to 3, the plurality of screw projections 31 are provided at intervals in the circumferential direction around the rotation axis line x on the slant surface of the atmosphere-side surface 23 of the lip distal end portion 22 of the seal lip 21. The plurality of screw projections 31 are provided at equal angular intervals in the circumferential direction, for example. The screw projection 31 is a projection, which projects from the atmosphere-side surface 23, and extends obliquely with respect to the lip contact end 22a as a distal end of the lip distal end portion 22. When the rotating shaft 50 (see Fig. 8) performs the forward rotation, the plurality of screw projections 31 produce an air flow moving from the atmosphere side a toward the sealing target object side b along the plurality of screw projections 31. Specifically, as illustrated in Fig. 3, the plurality of screw projections 31 are inclined in a forward rotation direction of the rotating shaft 50 toward the lip contact end 22a. In other words, the screw projection 31 is inclined to a forward rotation direction side of the rotating shaft 50 from an outer-side end 31a of the atmosphere side a toward an inner-side end 31b of the sealing target object side b. That is, the screw projection 30 extends on the atmosphere-side surface 23 in a direction at an angle of attack with respect to the forward rotation direction of the rotating shaft 50 (in other words, a forward direction screw). Note that as illustrated in Fig. 3, the outer-side end 31a is an end of the screw projection 31 on the outer side (atmosphere side a), and the inner-side end 31b is an end of the screw projection 31 on the inner side (sealing target object side b). Accordingly, when the rotating shaft 50 rotates in the forward rotation direction, the plurality of screw projections 31 exhibit the pump action for the sealed fluid and prevent a leak of the sealing target object such as oil from the sealing target object side b to the atmosphere side a beyond the lip contact end 22a.

As illustrated in Figs. 2 and 3, for example, the screw projection 31 extends from the lip contact end 22a, and the inner-side end 31b of the screw projection 31 is positioned at the lip contact end 22a. Further, as illustrated in Figs. 2 and 3, for example, the screw projection 31 does not reach an outer-side edge 23a as an edge of the atmosphere-side surface 23 on the outer side. In other words, the outer-side end 31a of the screw projection 31 is positioned in a position spaced apart inward in the rotation axis line x direction from the outer-side edge 23a of the atmosphere-side surface 23. Note that the screw projection 31 may reach the outer-side edge 23a of the atmosphere-side surface 23, and the outer-side end 31a of the screw projection 31 may be positioned on the outer-side edge 23a of the atmosphere-side surface 23. Further, the screw projection 31 may not reach the lip contact end 22a, and the inner-side end 31b of the screw projection 31 may be positioned in a position spaced apart outward in the rotation axis line x direction from the lip contact end 22a in the atmosphere-side surface 23.

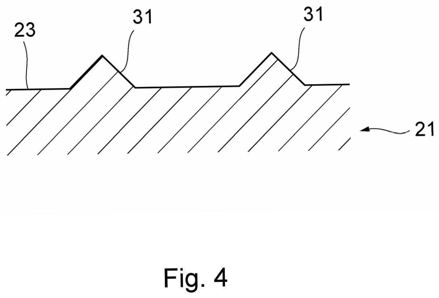

Further, as illustrated in Fig. 4, a shape of a cross section of the screw projection 31, the cross section being orthogonal to its extending direction, (hereinafter, referred to as a cross-sectional shape) is a triangle or an approximate triangle which projects toward the inner periphery side. Note that Fig. 4 is a cross-sectional view illustrating a cross section of the screw projections 31 of the sealing device 1 illustrated in Fig. 1, the cross section being orthogonal to the extending direction of the screw projections 31. As illustrated in Fig. 4, for example, the cross-sectional shape of the screw projection 31 is an equilateral triangle or an approximately equilateral triangle. The cross-sectional shape of the screw projection 31 is not limited to this and may be an isosceles triangle, another triangle, or an approximate triangle. Further, the cross-sectional shape of the screw projection 31 is not limited to a triangle and may include a quadrangle, another polygon, a cross section with a circular-arc-shaped or arc-shaped contour, a cross section with a curved contour, a cross section with a contour that describes a line formed with a combination of a plurality of straight lines, a cross section with a contour that describes a line formed with a combination of one or a plurality of curves and one or a plurality of straight lines, and so forth. It is preferable that the cross-sectional shape of the screw projection 31 be a shape which is symmetric with respect to a line orthogonal to the atmosphere-side surface 23 such as an equilateral triangle or an isosceles triangle.

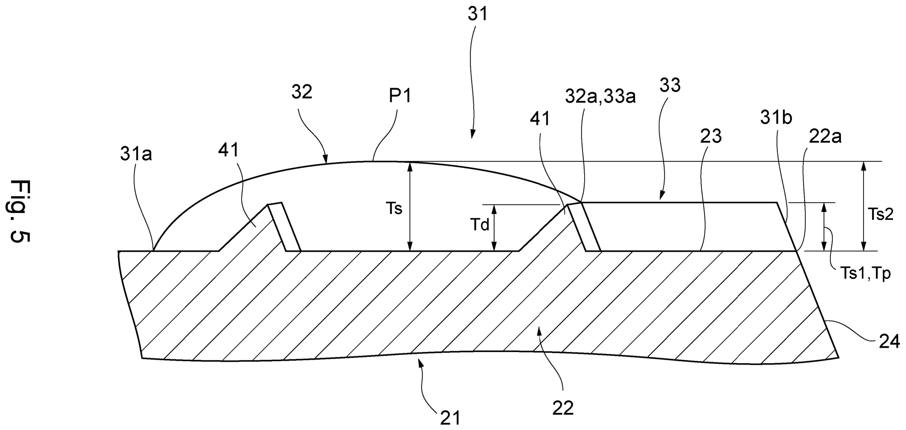

Further, as illustrated in Figs. 1 to 3 and 5, the screw projection 31 has a hull-shaped projection 32 and a parallel projection 33, for example. Note that Fig. 5 is a partial enlarged cross-sectional view of the seal lip 21, in which the screw projection 31 is seen in the circumferential direction. In the screw projection 31, the hull-shaped projection 32 and the parallel projection 33 are integrally connected together. In the screw projection 31, the hull-shaped projection 32 is positioned on the atmosphere side a relative to the parallel projection 33, and as illustrated in Figs. 3 and 5, an inner-side end 32a of the hull-shaped projection 32 and an outer-side end 33a of the parallel projection 33 are connected together. Note that the inner-side end 32a of the hull-shaped projection 32 is an end of the hull-shaped projection 32 on the inner side (sealing target object side b), and the outer-side end 33a of the parallel projection 33 is an end of the parallel projection 33 on the outer side (atmosphere side a). Further, an end of the hull-shaped projection 32 on the outer side is the outer-side end 31a of the screw projection 31, and an end of the parallel projection 33 on the inner side is the inner-side end 31b of the screw projection 31. In an illustrated example, the inner-side end 32a of the hull-shaped projection 32 is positioned in a position spaced apart from the lip contact end 22a to the atmosphere side a.

A height (height Ts) of the hull-shaped projection 32 is not constant. Note that the height Ts of the hull-shaped projection 32 is a projecting amount from the atmosphere-side surface 23 and is a distance from the atmosphere-side surface 23 in a direction orthogonal to the atmosphere-side surface 23. As illustrated in Fig. 5, for example, the height Ts of the hull-shaped projection 32 increases to a predetermined position (position P1) from the inner-side end 32a toward the outer-side end 31a and decreases from this predetermined position P1. In other words, as illustrated in Fig. 5, a height (height Ts2) of the hull-shaped projection 32 at the position P1 is higher than a height (height Ts1) of the hull-shaped projection 32 at the inner-side end 32a. The height Ts of the hull-shaped projection 32 is set to such a value that even when the lip distal end portion 22 is worn due to sliding on the rotating shaft 50 and the hull-shaped projection 32 is worn, a portion, which is not worn, of the hull-shaped projection 32 exhibits the pump action. Further, as illustrated in Fig. 3, the hull-shaped projection 32 is provided in a range of a width W2 in the atmosphere-side surface 23. A ratio of the width W2 of the hull-shaped projection 32 to a width W3 of the atmosphere-side surface 23 (W2/W3) is set to 1/3 or higher to 3/3 or lower. Note that the width W2 is a width in the axis line x along the atmosphere-side surface 23 and is a width between the inner-side end 32a and the outer-side end 31a. Further, the width W3 is a width in the axis line x along the atmosphere-side surface 23 and is a width between the lip contact end 22a and the outer-side edge 23a.

A height (height Tp) of the parallel projection 33 is constant or approximately constant. Note that the height Tp of the parallel projection 33 is also a projecting amount from the atmosphere-side surface 23 and is also a distance from the atmosphere-side surface 23 in the direction orthogonal to the atmosphere-side surface 23. As described above, the inner-side end 32a of the hull-shaped projection 32 is connected to the outer-side end 33a of the parallel projection 33, and for example, the height Ts1 of the inner-side end 32a of the hull-shaped projection 32 and the height (height Tp) of the outer-side end 33a of the parallel projection 33 are the same or approximately the same. In other words, the inner-side end 32a of the hull-shaped projection 32 has the same or approximately the same height as that of the parallel projection 33. The inner-side end 31b of the parallel projection 33 is positioned at the lip contact end 22a, and in the usage state, the lip contact end 22a contacting the rotating shaft 50 rises from the outer peripheral surface 50a of the rotating shaft 50 in the vicinity of the inner-side end 31b of the parallel projection 33. A rising amount of the lip contact end 22a from the outer peripheral surface 50a due to the parallel projection 33 corresponds to the height of the parallel projection 33 and becomes larger as the height of the parallel projection 33 becomes higher. As described above, the sealing device 1 temporarily stores the exuded sealed fluid by the weir portion 41 of the storage portion 40 in the reverse rotation of the rotating shaft 50. When the rising amount of the lip contact end 22a from the outer peripheral surface 50a due to the parallel projection 33 is too large, an amount of the exuded sealed fluid might increase in the reverse rotation of the rotating shaft 50, and not the whole exuded sealed fluid might be able to be stored by the weir portion 41 of the storage portion 40.

Fig. 7 is a diagram illustrating a relationship between the height Tp of the parallel projection 33 and contact between the lip distal end portion 22 and the rotating shaft 50. Fig. 7 illustrates a contact surface formed between each of the lip distal end portions 22 which have the parallel projections 33 with different heights Tp and the rotating shaft 50. As illustrated in Fig. 7, in the usage state, the contact between the lip distal end portion 22 and the rotating shaft 50 becomes more uniform and becomes more stable contact as the height Tp of the parallel projection 33 becomes lower and becomes less uniform and becomes less stable contact as the height Tp of the parallel projection 33 becomes higher. As described above, it can be understood that variation of sealing performance occurs in accordance with the height Tp of the parallel projection 33.

Thus, the height Tp of the parallel projection 33 is set such that the sealing device 1 has desired sealing performance, for example. Further, the height Tp of the parallel projection 33 is set in accordance with a storage capacity of the weir portion 41 of the storage portion 40 in the reverse rotation of the rotating shaft 50, for example, and is set in accordance with an amount of the sealed fluid which is exuded in the reverse rotation of the rotating shaft 50, the amount being capable of being stored by the weir portion 41 of the storage portion 40. Thus, similarly to the parallel projection 33, the height Ts1 of the inner-side end 32a of the hull-shaped projection 32 connected to the parallel projection 33 is set in accordance with the desired sealing performance of the sealing device 1 or the amount of the sealed fluid which is exuded in the reverse rotation of the rotating shaft 50, the amount being capable of being stored by the weir portion 41 of the storage portion 40, for example. In such a manner, the height Ts1 of the inner-side end 32a of the hull-shaped projection 32 and the height Tp of the parallel projection 33 are set to heights which inhibit lowering of sealing performance of the seal lip 21.

Note that a sealing device in related art that has no storage portion 40 and has a plurality of screw projections which exhibit the pump action is not used for a rotating shaft that performs reverse rotation in which the pump action might not be exhibited. Thus, in a range of an ability of the pump action, a height of an inner-side end of a hull-shaped projection and a height of a parallel projection can be made higher. Thus, the height Ts1 of the inner-side end 32a of the hull-shaped projection 32 and the height Tp of the parallel projection 33 of the sealing device 1 are lower than the height of the inner-side end of the hull-shaped projection and the height of the parallel projection of the sealing device in related art.

Further, as illustrated in Fig. 3, the parallel projection 33 is provided in a range of a width W1 in the atmosphere-side surface 23. A ratio of the width W1 of the parallel projection 33 to the width W3 of the atmosphere-side surface 23 (W1/W3) is set equal to or lower than 1/3. Note that the width W1 is a width in the axis line x along the atmosphere-side surface 23 and is a width between the lip contact end 22a and the outer-side end 33a.

In the above-described example, the screw projection 31 has the hull-shaped projection 32 and the parallel projection 33. However, the screw projection 31 may not have the parallel projection 33. In this case, the inner-side end 32a of the hull-shaped projection 32 is the inner-side end 31b of the screw projection 31, the hull-shaped projection 32 extends from the lip contact end 22a, and the inner-side end 32a of the hull-shaped projection 32 is positioned at the lip contact end 22a.

Specifically, the weir portion 41 is a projection which is provided on the slant surface of the atmosphere-side surface 23 of the lip distal end portion 22 of the seal lip 21, extends in an annular shape around the rotation axis line x, and projects from the atmosphere-side surface 23. In the sealing device 1 of the present embodiment, an example is illustrated where two weir portions 41 having a projection shape are provided in an annular shape around the rotation axis line x, but in an annular shape around the rotation axis line x, one weir portion 41 may be provided, or three or more weir portions 41 may be provided.

For example, the weir portion 41 extends along a circle or an approximate circle which has the rotation axis line x as a center or an approximate center, for example. Further, the weir portion 41 is connected to the plurality of screw projections 31. Specifically, the weir portion 41 intersects with the plurality of screw projections 31. A height (height Td) of the weir portion 41 is constant or approximately constant throughout the weir portion 41 in its extending direction, for example. Note that the height Td of the weir portion 41 is a projecting amount from the atmosphere-side surface 23 and is a distance from the atmosphere-side surface 23 in the direction orthogonal to the atmosphere-side surface 23. The height Td of the weir portion 41 is set to such a height that the weir portion 41 does not contact the outer peripheral surface 50a of the rotating shaft 50 in the usage state where the lip distal end portion 22 is not worn, for example. Further, a distance (distance L1) between the weir portion 41 and the lip contact end 22a in the rotation axis line x direction is constant or approximately constant throughout the weir portion 41 in its extending direction in the circumferential direction. In other words, in the atmosphere-side surface 23, the weir portion 41 is positioned in a position spaced apart from the lip contact end 22a by a constant or approximately constant distance in the rotation axis line x direction.

As described above, the weir portion 41 temporarily stores the sealed fluid, which moves from the sealing target object side b beyond the lip contact end 22a, in the reverse rotation of the rotating shaft 50. Specifically, because the weir portion 41 extends in an annular shape around the rotation axis line x and projects from the atmosphere-side surface 23, the weir portion 41 blocks the sealed fluid, which moves from the sealing target object side b beyond the lip contact end 22a, to the sealing target object side b relative to the weir portion 41. Thus, in a range of the sealed fluid that the weir portion 41 can block to the sealing target object side b, the weir portion 41 can store the sealed fluid which moves from the sealing target object side b beyond the lip contact end 22a. Because the sealed fluid is stored to the sealing target object side b relative to the weir portion 41 by the weir portion 41, the liquid blocking region 42 is formed on the sealing target object side b relative to the weir portion 41 in the storage portion 40. Specifically, the liquid blocking region 42 is a region which is demarcated by the weir portion 41, the atmosphere-side surface 23, and the lip contact end 22a and is spread in a tubular shape around the rotation axis line x, for example.

The sealed fluid, which is stored in the liquid blocking region 42 by the weir portion 41 in the reverse rotation of the rotating shaft 50, is returned to the sealing target object side b beyond the lip contact end 22a by the pump action of the plurality of screw projections 31 in the next forward rotation of the rotating shaft 50. Accordingly, leakage of the sealed fluid in the reverse rotation of the rotating shaft 50 is inhibited. Thus, so that leakage of the sealed fluid in the reverse rotation of the rotating shaft 50 is inhibited, the weir portion 41 blocks the sealed fluid such that the sealed fluid stored in the liquid blocking region 42 is returned to a sealing target side b by the plurality of screw projections 31 in the forward rotation of the rotating shaft 50.

For example, the distance L1 between the weir portion 41 and the lip contact end 22a in the rotation axis line x direction is a predetermined distance, and the predetermined distance L1 is set based on an amount of the sealed fluid to be stored in the liquid blocking region 42. Further, the predetermined distance L1 between the weir portion 41 and the lip contact end 22a is set based on an amount of the sealing target object which is returned to the sealing target object side b beyond the lip contact end 22a by the pump action of the plurality of screw projections 31.

Specifically, for example, the predetermined distance L1 is set such that the amount of the sealed fluid, which is stored in the liquid blocking region 42 in the reverse rotation of the rotating shaft 50, becomes an amount to be returned to the sealing target side b by the pump action of the plurality of screw projections 31 in the next forward rotation of the rotating shaft 50. Further, specifically, for example, the predetermined distance L1 is set such that the amount of the sealed fluid, which is stored in the liquid blocking region 42 in the reverse rotation of the rotating shaft 50, becomes an amount to be returned to the sealing target side b by the pump action of the plurality of screw projections 31 in next several forward rotations of the rotating shaft 50. In this case, specifically, for example, the predetermined distance L1 is set such that the amount of the sealed fluid, which is stored in the liquid blocking region 42 in one reverse rotation of the rotating shaft 50, becomes smaller than an amount of the sealed fluid to be returned to the sealing target side b by the pump action of the plurality of screw projections 31 in next one forward rotation of the rotating shaft 50. Further, specifically, for example, the predetermined distance L1 is set such that the sealed fluid, which is stored in the liquid blocking region 42 in the reverse rotation, is in a range in which the pump action of the plurality of screw projections 31 is exerted in the next forward rotation of the rotating shaft 50.

Further, for example, the height Td of the weir portion 41 is a predetermined height, and the predetermined height Td is set based on the amount of the sealed fluid to be stored in the liquid blocking region 42. Further, the predetermined height Td of the weir portion 41 is set based on the amount of the sealing target object which is returned to the sealing target object side b beyond the lip contact end 22a by the pump action of the plurality of screw projections 31.

Specifically, for example, the predetermined height Td is set such that the amount of the sealed fluid, which is stored in the liquid blocking region 42 in the reverse rotation of the rotating shaft 50, becomes the amount to be returned to the sealing target side b by the pump action of the plurality of screw projections 31 in the next forward rotation of the rotating shaft 50. Further, specifically, for example, the predetermined height Td is set such that the amount of the sealed fluid, which is stored in the liquid blocking region 42 in the reverse rotation of the rotating shaft 50, becomes the amount to be returned to the sealing target side b by the pump action of the plurality of screw projections 31 in next several forward rotations of the rotating shaft 50. In this case, specifically, for example, the predetermined height Td is set such that the amount of the sealed fluid, which is stored in the liquid blocking region 42 in one reverse rotation of the rotating shaft 50, becomes smaller than the amount of the sealed fluid to be returned to the sealing target side b by the pump action of the plurality of screw projections 31 in next one forward rotation of the rotating shaft 50.

Further, for example, the distance L1 between the weir portion 41 and the lip contact end 22a in the rotation axis line x direction is the predetermined distance, the height Td of the weir portion 41 is the predetermined height, and the predetermined distance L1 and the predetermined height Td are set based on the amount of the sealed fluid to be stored in the liquid blocking region 42. Further, the predetermined distance L1 and the predetermined height Td are set based on the amount of the sealing target object which is returned to the sealing target object side b beyond the lip contact end 22a by the pump action of the plurality of screw projections 31. Specifically, for example, similarly to a setting of the above-described predetermined distance L1 and similarly to a setting of the above-described predetermined height Td, the predetermined distance and predetermined height are set.

Note that a configuration of the weir portion 41, in which the weir portion 41 blocks the sealed fluid such that leakage of the sealed fluid in the reverse rotation of the rotating shaft 50 is inhibited and such that the sealed fluid stored in the liquid blocking region 42 is returned to the sealing target side b by the plurality of screw projections 31 in the forward rotation of the rotating shaft 50, is not limited to the above-described configuration.

The position and height of the weir portion 41 are adjusted as described above, and leakage of the sealed fluid can thereby be inhibited even in a case where the rotating shaft 50 highly frequently performs the reverse rotation, for example, and even in a case where the rotating shaft 50 performs the reverse rotation for a long time, for example. Specifically, for example, the distance L1 between the weir portion 41 and the lip contact end 22a in the rotation axis line x direction is made longer, or the height Td of the weir portion 41 is made higher, the liquid blocking region 42 can thereby be made larger, and the amount of the sealed fluid to be stored in the liquid blocking region 42 can thereby be increased. Accordingly, even in a case where the rotating shaft 50 highly frequently performs the reverse rotation, for example, and even in a case where the rotating shaft 50 performs the reverse rotation for a long time, for example, leakage of the sealed fluid can be inhibited. In this case as well, the position and height of the weir portion 41 are set to a range in which the pump action of the plurality of screw projections 31 provides an effect of inhibiting leakage of the sealed fluid.

As the height Td of the weir portion 41 becomes lower, the weir portion 41 can be made closer to the lip contact end 22a. In this case, in the reverse rotation of the rotating shaft 50, the sealed fluid exuded beyond the lip contact end 22a can be stored in a range in which the pump action to be exhibited by the plurality of screw projections 31 more strongly acts. Accordingly, leakage of the sealed fluid can more effectively be inhibited.

For example, the height Td of the weir portion 41 is equal to or lower than a height of a portion of each of the plurality of screw projections 31, to which the weir portion 41 is connected. As illustrated in Fig. 5, the weir portion 41 is connected to the inner-side end 32a of the hull-shaped projection 32 of each of the plurality of screw projections 31, for example, and the height Td of the weir portion 41 is the same or approximately the same as the height Ts1 of the inner-side end 32a of the hull-shaped projection 32. Note that the height Td of the weir portion 41 may be lower than the height Ts1 of the inner-side end 32a of the hull-shaped projection 32. Further, the weir portion 41 may be connected to a portion which is not the inner-side end 32a of the hull-shaped projection 32 of each of the plurality of screw projections 31.

For example, the height Td of the weir portion 41 is 0.05 mm, and the distance L1 of the weir portion 41 from the lip contact end 22a is 0.57 mm. Further, the position of the inner-side end 32a of the hull-shaped projection 32 is a position spaced apart from the lip contact end 22a in the rotation axis line x direction by 0.3 mm. Further, the height Ts1 of the inner-side end 32a of the hull-shaped projection 32 is 0.015 mm.

Further, as illustrated in Fig. 6, a shape of a cross section of the weir portion 41, the cross section being orthogonal to its extending direction, (hereinafter, referred to as a cross-sectional shape) is a triangle or an approximate triangle which projects toward the inner periphery side. Further, the weir portion 41 has a surface (weir surface 41a) facing the sealing target object side b, and the weir surface 41a is formed to be inclined to the atmosphere side with respect to a plane orthogonal to the rotation axis line x. Specifically, a cross-sectional shape of the weir portion 41 is a scalene triangle as illustrated in Fig. 6, for example, and a length of the weir surface 41a in a cross section is shorter than a length, in the cross section, of a surface 41b facing away from the weir surface 41a. Further, the weir surface 41a is inclined to the atmosphere side a with respect to the atmosphere-side surface 23. Accordingly, in a case where the lip distal end portion 22 is worn and the weir portion 41 contacts the outer peripheral surface 50a of the rotating shaft 50, a gap can be made less likely to be formed in the vicinity of a connection portion between the weir surface 41a and the atmosphere-side surface 23, and lowering of sealing performance of the sealing device 1 over time can be inhibited. On the other hand, when the weir surface 41a is inclined to the sealing target object side b with respect to the atmosphere-side surface 23, in a case where the lip distal end portion 22 is worn and the weir portion 41 contacts the outer peripheral surface 50a of the rotating shaft 50, a gap might be formed in the vicinity of the connection portion between the weir surface 41a and the atmosphere-side surface 23, a contact surface of the lip distal end portion 22 with the rotating shaft 50 forms a double circle, and sealing performance of the sealing device 1 might lower.

Note that the cross-sectional shape of the weir portion 41 is not limited to the above-described shape and may be an equilateral triangle, an isosceles triangle, another triangle, or an approximate triangle. Further, the cross-sectional shape of the weir portion 41 is not limited to a triangle and may include a quadrangle, another polygon, a cross section with a circular-arc-shaped or arc-shaped contour, a cross section with a curved contour, a cross section with a contour that describes a line formed with a combination of a plurality of straight lines, a cross section with a contour that describes a line formed with a combination of one or a plurality of curves and one or a plurality of straight lines, and so forth. The cross-sectional shape of the weir portion 41 may be a shape which is symmetric with respect to a line orthogonal to the atmosphere-side surface 23 such as an equilateral triangle or an isosceles triangle or may be a non-isosceles triangle in which an inclination angle of a slant surface on the sealing target object side b is larger than an inclination angle of a slant surface on the atmosphere side a. Note that Fig. 6 is a cross-sectional view illustrating a cross section of the weir portions of the sealing device illustrated in Fig. 1, the cross section being orthogonal to the extending direction of the weir portions.

The weir portion 41 as another weir portion 41 is provided on the atmosphere side a relative to the weir portion 41. The other weir portion 41 is formed similarly to the weir portion 41 on the sealing target object side b so as to provide a similar action to that of the weir portion 41 on the sealing target object side b. The other weir portion 41 is provided so as to perform a similar action to that of the weir portion 41 on the sealing target object side b in addition to the weir portion 41 on the sealing target object side b or instead of the weir portion 41 on the sealing target object side b when wear of the lip distal end portion 22 progresses and the height of the weir portion 41 on the sealing target object side b is decreased or the weir portion 41 on the sealing target object side b is worn out. For example, the other weir portion 41 and the weir portion 41 on the sealing target object side b have the same or approximately the same form in shape, size, and so forth. Further, the other weir portion 41 and the weir portion 41 on the sealing target object side b may not have the same or approximately the same form in shape, size, or the like. Specifically, for example, a height of the other weir portion 41 may be higher or lower than the height of the weir portion 41 on the sealing target object side b. Note that the other weir portion 41 may be provided not for complementing a function of the worn weir portion 41 on the sealing target object side b but for doubly obtaining the action of the weir portion 41 on the sealing target object side b.

Hereinafter, a description will be made about an action of the sealing device 1 of the present embodiment. As illustrated in Fig. 8, the sealing device 1 is mounted on a space between the rotating shaft 50 and a through hole 52 for sealing a portion between the rotating shaft 50 and a housing 51 having the through hole 52, through which the rotating shaft 50 is inserted, in the usage state. The rotating shaft 50 is an output shaft of a driving motor of an automobile, for example, and the housing 51 is a cover of the motor, for example.

As illustrated in Fig. 8, in the usage state, the sealing device 1 is press-fitted into and mounted on the through hole 52 of the housing 51, and the gasket portion 29 of the elastic body portion 20 is compressed between the housing 51 and the reinforcement ring 10 and contacts an inner peripheral surface 52a of the through hole 52. Accordingly, a portion between the sealing device 1 and the through hole 52 of the housing 51 is tightly closed. Further, the lip distal end portion 22 of the seal lip 21 contacts the outer peripheral surface 50a of the rotating shaft 50 such that the rotating shaft 50 is slidable, and a portion between the sealing device 1 and the rotating shaft 50 is tightly closed.

Further, at least a part of each of the screw projections 31 contacts the outer peripheral surface 50a of the rotating shaft 50. For example, the screw projection 31 contacts the outer peripheral surface 50a of the rotating shaft 50 at a contact portion 34 as one portion of the screw projection 31 which is continuous from the inner-side end 31b.

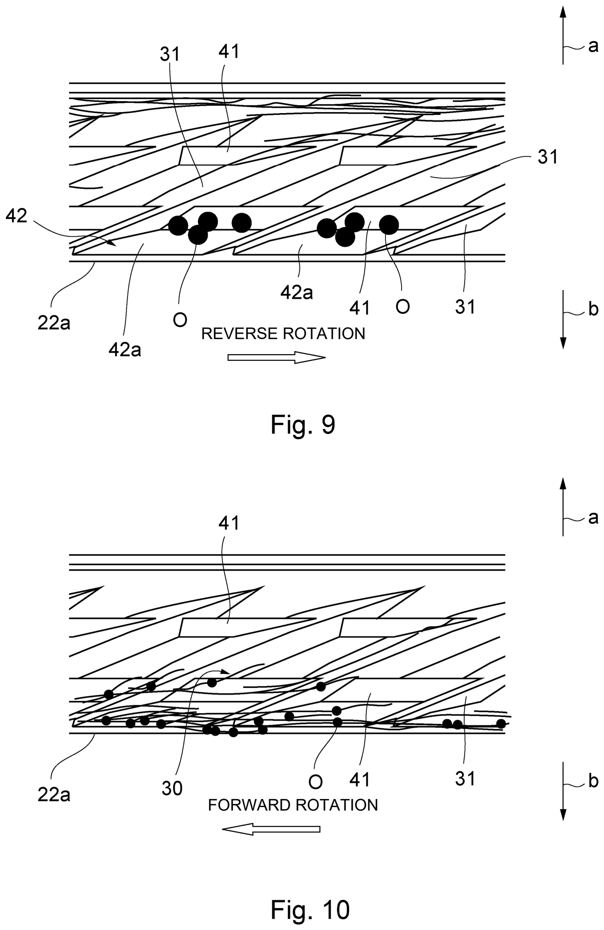

The plurality of screw projections 31 are provided to be inclined to the forward rotation direction side of the rotating shaft 50 toward the sealing target object side b. Thus, when the rotating shaft 50 rotates in the forward rotation direction in the above-described usage state, as illustrated in Fig. 10, the pump action can be obtained which acts to return droplets of a sealing target (for example, oil O) from the atmosphere side a to the sealing target object side b. Thus, the oil O, which leaks out to the atmosphere side a beyond the lip contact end 22a of the lip distal end portion 22, is pushed back to the sealing target object side b by the pump action of the screw projections 31.

Further, when the rotating shaft 50 rotates in a reverse rotation direction, as illustrated in Fig. 9, the oil O, which is exuded to the atmosphere side a beyond the lip contact end 22a of the lip distal end portion 22, is blocked by the weir portion 41 and is temporarily stored in the liquid blocking region 42. As illustrated in Fig. 9, the liquid blocking region 42 is partitioned in the circumferential direction by the plurality of screw projections 31 and has a plurality of region pieces 42a. In other words, the liquid blocking region 42 has the plurality of region pieces 42a in the circumferential direction, the region piece 42a being a region which is surrounded by the screw projections 31 and the weir portion 41 and has an approximate rhombus shape. Thus, the exuded oil O is stored in each of the region pieces 42a. Accordingly, movement of the stored oil O in the circumferential direction is inhibited, and uniform storage or approximately uniform storage of the oil O can be performed. As for the motor of the electric automobile, a time of backward travel by reverse rotation is a comparatively short time compared to a time of forward travel by forward rotation, and drops of the oil O, which is temporarily stored in the liquid blocking region 42, are pushed back to the sealing target object side b by the pump action of the above-described screw projections 31 in the forward rotation of the rotating shaft 50. Here, Fig. 9 is a schematic diagram for explaining flow behavior of the sealed fluid (specifically, the oil 0) in the reverse rotation of the rotating shaft 50 in the sealing device 1, and Fig. 10 is a schematic diagram for explaining the flow behavior of the sealed fluid in the forward rotation of the rotating shaft 50 in the sealing device 1.

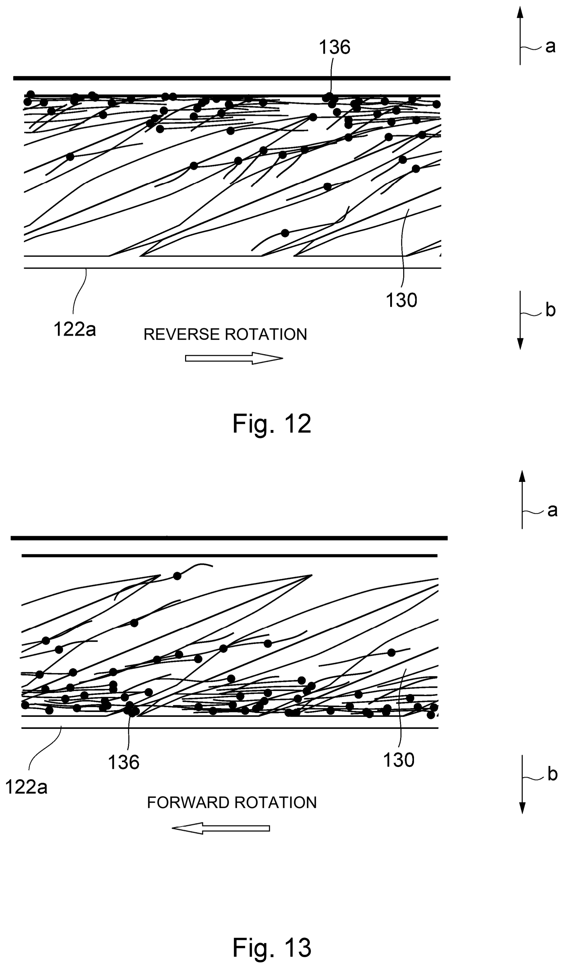

On the other hand, a sealing device in related art, which does not have the screw projections 31 or the weir portions 41 as in the sealing device 1 of the present embodiment and has only a plurality of screw projections provided to be inclined to a forward rotation direction side of a rotating shaft toward the sealing target object side b, for example, might not exhibit a pump action from an atmosphere side to a sealing target object side when the rotating shaft performs reverse rotation. For example, Fig. 12 is a schematic diagram for explaining flow behavior of a sealed fluid (specifically, oil 136) in the reverse rotation of the rotating shaft in the sealing device in related art. Fig. 13 is a schematic diagram for explaining the flow behavior of the sealed fluid in forward rotation of the rotating shaft in the sealing device in related art. As illustrated in Fig. 13, in the sealing device in related art in which no weir portion 41 is provided, when the rotating shaft rotates in the forward rotation direction, the pump action can be obtained which acts to return droplets of the oil 136 as a sealing target exuded to the atmosphere side a beyond the lip contact end 122a from the atmosphere side a to the sealing target object side b. However, as illustrated in Fig. 12, when the rotating shaft performs the reverse rotation, the pump action from the atmosphere side a to the sealing target object side b is not exhibited, and the oil 136 might be leaked to the atmosphere side a along screw projections 130.

As described above, in the sealing device 1 of the present embodiment, leakage of the sealed fluid such as oil can effectively be inhibited in both of the forward rotation and the reverse rotation of the rotating shaft. Thus, for example, leakage of the sealed fluid to the atmosphere side can effectively be inhibited even when an entrapment or the like of foreign matter or sludge occurs in the reverse rotation. Note that the sealing device 1 of the present embodiment which has been described in the foregoing only represents a representative form, and the present disclosure is not limited to the present embodiment. That is, it is sufficient that the sealing device 1 of the present embodiment is a sealing device that inhibits leakage of the sealed fluid in both of the forward rotation and the reverse rotation of the rotating shaft, and it is sufficient that each configuration element configuring the sealing device 1 is a configuration element applicable to the rotating shaft which is capable of the forward and reverse rotation. Further, the sealing device 1 is not limited to a sealing device which is applied to a motor of an electric automobile and is applicable to other devices which have a rotating shaft.

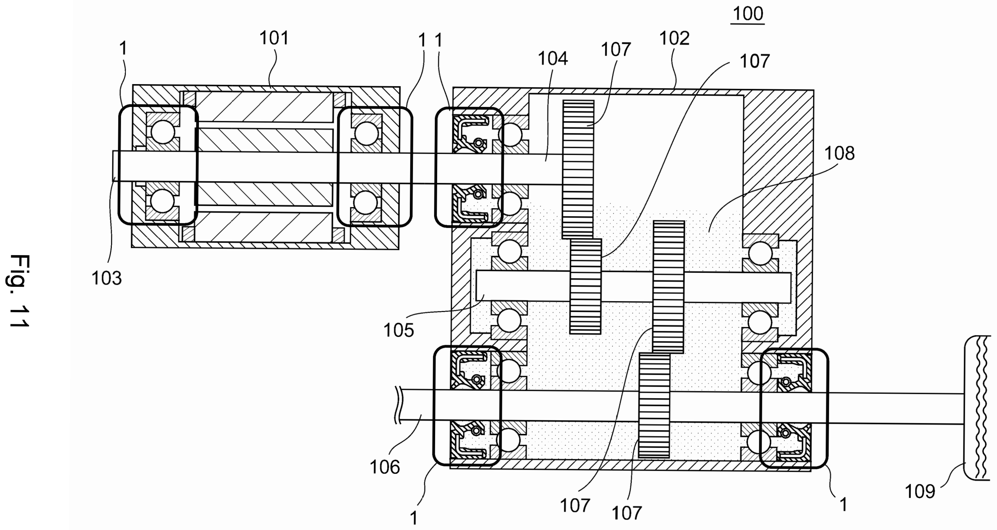

Next, a description will be made about one embodiment of a driving system including the sealing device according to the present embodiment. The driving system of the present embodiment is a driving system that includes a rotating shaft capable of forward and reverse rotation, a housing having a shaft hole of the rotating shaft, a sealing device which is provided in the shaft hole so as to slidably contact a peripheral surface of the rotating shaft, and a sealed fluid which is sealed in the housing in a liquid-tight manner. For example, a driving system 100 illustrated in Fig. 11 includes a rotation apparatus as a driving force source such as a motor 101 and a transmission 102 which changes a speed of rotation transmitted from the driving force source side and outputs the rotation, and the sealing devices 1 described in the foregoing are provided for rotating shafts of such motor 101 and transmission 102. Here, Fig. 11 is a schematic diagram for illustrating an outline configuration of one embodiment of the driving system including the sealing device and illustrates one example of the driving system in an electric automobile.

As illustrated in Fig. 11, as the driving system 100, a driving system can be raised which includes the motor 101 as the driving force source and in which the above-described rotating shaft includes a motor shaft 103 as a power shaft. Furthermore, the sealing device 1 described in the foregoing is provided in a shaft hole of a housing to serve as a casing of the motor 101 so as to slidably contact a peripheral surface of the motor shaft 103. Further, as the driving system 100, a driving system can be raised which includes the transmission 102 which changes the speed of rotation transmitted from the driving force source side and outputs the rotation and in which the above-described rotating shaft includes at least one of an input shaft 104 and an output shaft 106 of the transmission 102. Furthermore, the sealing device 1 described in the foregoing is provided in a shaft hole of a housing to serve as a casing of the transmission 102 so as to slidably contact a peripheral surface of the input shaft 104 and/or the output shaft 106.

Oil 108 as the sealed fluid is sealed in each of the housings of the motor 101 and the transmission 102, liquid tightness in each of the housings is maintained by the sealing device 1 which is provided in each of the shaft holes of the motor shaft 103, the input shaft 104, and the output shaft 106.

Note that in the transmission 102 illustrated in Fig. 11, the motor shaft 103 and the input shaft 104 of the transmission 102 are coupled together, and thus driving force produced in the motor 101 is transmitted to the transmission 102 via the motor shaft 103 and the input shaft 104. Further, the transmission 102 further has an intermediate shaft 105 which changes a speed of the driving force transmitted from the input shaft 104, and the input shaft 104, the intermediate shaft 105, and the output shaft 106 drive a wheel 109, which is provided on the output shaft 106, via a gear 107.

The driving system of the present embodiment is not limited to a driving system in an electric automobile and may be a driving system in an automobile other than an electric mobile or may be various kinds of driving systems in rotation apparatuses other than automobiles, for example. That is, the driving system of the present embodiment can be applied to various kinds of driving systems that include a rotating shaft capable of forward and reverse rotation and transmit driving force by the rotating shaft.

In the foregoing, the present invention is described based on the above embodiments, but the technical scope of the present invention is not limited to the scope described in the above embodiments. It is clear for a person skilled in the art that various changes or improvements can be applied to the above embodiments. It is clear from descriptions of the claims that forms in which such changes or improvements are applied can be included in the technical scope of the present invention.

The embodiments described in the foregoing are for facilitating understanding of the present invention but are not for limited interpretation of the present invention. Further, the above-described embodiments do not limit use targets for which the present invention is used, and the present invention can include all articles as the use targets thereof. Each configuration element included in the above embodiments and its arrangement, material, condition, shape, size, and so forth are not limited to those given as examples and can be changed as appropriate. For example, the present invention includes differences that occur in practice such as tolerance in manufacture. Further, within the scope in which no technical contradiction occurs, the configuration elements mentioned in the different embodiments can partially be substituted or combined. Further, configurations can appropriately selectively be combined such that at least a part of the above-described objects and effects are achieved.

### Industrial Applicability

A sealing device of the present invention can be used for sealing a gap between a rotating shaft, which rotates in one direction and another direction, and a through hole of a housing, through which the rotating shaft is inserted, in automobiles, general-purpose machines, and so forth.

### Reference Signs List

- 1: sealing device
- 10: reinforcement ring
- 11: cylindrical portion
- 12: flange portion
- 20: elastic body portion
- 21: seal lip
- 22: lip distal end portion
- 22a: lip contact end
- 23: atmosphere-side surface
- 23a: outer-side edge
- 24: sealing-side surface
- 25: lip body portion
- 26: dust lip
- 27: garter spring
- 28: rear cover
- 29: gasket portion
- 30: inhibition portion
- 31: screw projection
- 31a: outer-side end
- 31b: inner-side end
- 32: hull-shaped projection
- 32a: inner-side end
- 33: parallel projection
- 33a: outer-side end
- 34: contact portion
- 40: storage portion
- 41: weir portion
- 41a: weir surface
- 41b: surface
- 42: liquid blocking region
- 42a: region piece
- 50: rotating shaft
- 50a: outer peripheral surface
- 51: housing
- 52: through hole
- 52a: inner peripheral surface
- 63: lip outer peripheral surface
- 100: driving system
- 101: motor
- 102: transmission
- 103: motor shaft
- 104: input shaft
- 105: intermediate shaft
- 106: output shaft
- 107: gear
- 108: oil
- 109: wheel
- 122a: lip contact end
- 130: screw projection
- 136: oil
- 200: sealing device
- 201: reinforcement ring
- 202: elastic body portion
- 203: seal lip
- 204: dust lip
- 205: lip distal end portion
- 206: screw projection
- O: oil
- P1: position
- Td: height of weir portion
- Tp: height of parallel projection
- Ts, Ts1, Ts2: height of hull-shaped projection

## Claims

1. A sealing device used for a rotating shaft which rotates in one direction and in another direction, the sealing device comprising:
a reinforcement ring that is annular around a rotation axis line; and
an elastic body portion that has a seal lip, is mounted on the reinforcement ring, is formed with an elastic body, and is annular around the rotation axis line, wherein
the seal lip has a lip distal end portion as an annular portion which protrudes toward the rotation axis line,
the lip distal end portion has a sealing-side surface as an annular surface on a sealing target object side and an atmosphere-side surface as an annular surface on an atmosphere side, the sealing-side surface and the atmosphere-side surface being connected together via a lip distal end,
the atmosphere-side surface
has an inhibition portion which inhibits leakage of a sealing target object to the atmosphere side even when the rotating shaft rotates in the one direction at a circumferential speed of 80 m/s, and
has a storage portion which stores the sealing target object leaking out to the atmosphere side even when the rotating shaft rotates in the other direction at a circumferential speed of 80 m/s,
the inhibition portion has a plurality of screw projections for returning the sealing target object, which leaks out, to the sealing target object side by a pump action when the rotating shaft rotates in the one direction, and
the storage portion has a weir portion as a projection for blocking the sealing target object, which leaks out to the atmosphere side, when the rotating shaft rotates in the other direction.

2. The sealing device according to claim 1, wherein
the weir portion blocks the sealing target object such that the stored sealing target object is returned to the sealing target object side by the screw projections when the rotating shaft rotates in the one direction.

3. The sealing device according to claim 1, wherein
a distance between the weir portion and an end of the atmosphere-side surface on the sealing target object side in the rotation axis line direction is a predetermined distance, and
the predetermined distance is based on an amount of the sealing target object to be stored in the storage portion.

4. The sealing device according to claim 1, wherein
a distance between the weir portion and an end of the atmosphere-side surface on the sealing target object side in the rotation axis line direction is a predetermined distance, and
the predetermined distance is based on an amount of the sealing target object to be returned to the sealing target object side by the inhibition portion.

5. The sealing device according to claim 1, wherein
the weir portion has a predetermined height, and
the predetermined height is based on an amount of the sealing target object to be stored in the storage portion.

6. The sealing device according to claim 1, wherein
the weir portion has a predetermined height, and
the predetermined height is based on an amount of the sealing target object to be returned to the sealing target object side by the inhibition portion.

7. The sealing device according to claim 1, wherein
the weir portion is connected to the plurality of screw projections.

8. The sealing device according to claim 7, wherein
a height of the weir portion is equal to or lower than a height of a portion of each of the plurality of screw projections, to which the weir portion is connected.

9. The sealing device according to claim 1, wherein
the weir portion has a surface which faces the sealing target object side, and
the surface of the weir portion which faces the sealing target object side is inclined to the atmosphere side with respect to a plane orthogonal to the rotation axis line.

10. The sealing device according to claim 1, wherein
the weir portion extends in an annular shape around the rotation axis line.

11. The sealing device according to claim 1, wherein
the screw projection has a hull-shaped projection, and
a height of the hull-shaped projection of the screw projection increases to a predetermined position and decreases from the predetermined position, from an end of the hull-shaped projection on the sealing target object side toward an end of the hull-shaped projection on the atmosphere side.

12. The sealing device according to claim 11, wherein
a height of the end of the hull-shaped projection on the sealing target object side is set to a height which inhibits lowering of sealing performance of the seal lip.

13. The sealing device according to claim 11, wherein
the hull-shaped projection extends from an end of the atmosphere-side surface on the sealing target object side or a position spaced apart from the end of the atmosphere-side surface on the sealing target object side to the atmosphere side.

14. The sealing device according to claim 11, wherein
the screw projection has a parallel projection as a portion in which a height is constant, and
the parallel projection extends from the end of the hull-shaped projection on the sealing target object side to an end of the atmosphere-side surface on the sealing target object side.

15. The sealing device according to claim 1, wherein
the screw projection is inclined in the one direction with respect to an end of the atmosphere-side surface on the sealing target object side.

16. The sealing device according to claim 1, wherein
the storage portion has another weir portion, and
the other weir portion is provided on the atmosphere side relative to the weir portion.

17. The sealing device according to claim 16, wherein
a height of the other weir portion is higher than a height of the weir portion.

18. A sealing device used for a rotating shaft which rotates in one direction and in another direction, the sealing device comprising:
a reinforcement ring that is annular around a rotation axis line; and
an elastic body portion that has a seal lip, is mounted on the reinforcement ring, is formed with an elastic body, and is annular around the rotation axis line, wherein
the seal lip has a lip distal end portion as an annular portion which protrudes toward the rotation axis line,
the lip distal end portion has a sealing-side surface as an annular surface on a sealing target object side and an atmosphere-side surface as an annular surface on an atmosphere side, the sealing-side surface and the atmosphere-side surface being connected together via a lip distal end,
the atmosphere-side surface
has an inhibition portion which inhibits leakage of a sealing target object to the atmosphere side when the rotating shaft rotates in the one direction, and
has a storage portion which stores the sealing target object leaking out to the atmosphere side when the rotating shaft rotates in the other direction,
the inhibition portion has a plurality of screw projections for returning the sealing target object, which leaks out, to the sealing target object side by a pump action when the rotating shaft rotates in the one direction, and
the storage portion has a weir portion as a projection for blocking the sealing target object, which leaks out to the atmosphere side, when the rotating shaft rotates in the other direction.
